# EUROPEAN PATENT APPLICATION

(11) **EP 2 143 536 A1**
(43) Date of publication of application: **13.01.2010**
(21) Application number: 08704183.6
(22) Date of filing: 30.01.2008
(51) Int. Cl.: B28B 3/20, B01D 39/20

(54) **PROCESS FOR PRODUCING CERAMIC HONEYCOMB STRUCTURE**

(30) Priority: 30.03.2007 JP 2007092363
(71) Applicant: Hitachi Metals, Ltd., Minato-ku Tokyo 105-8614 (JP)
(72) Inventor: OKAZAKI, Shunji, Miyako-gun Fukuoka 800-0393 (JP)
(74) Representative: Strehl Schübel-Hopf & Partner
(86) International application number: PCT/JP2008/051420
(87) International publication number: WO 2008/126450

(57) **Abstract**

A method for producing a ceramic honeycomb structure comprising the steps of mixing and blending starting materials comprising ceramic materials, a molding aid and a pore-forming material to obtain a moldable material, adjusting the properties of the moldable material, and extruding the moldable material in a honeycomb shape, the type C durometer hardness (according to JIS K 7312) of the moldable material being adjusted to 16-23 in the step of adjusting the properties of the moldable material.

## Description

### FIELD OF THE INVENTION

The present invention relates to a method for producing a ceramic honeycomb structure for use in exhaust-gas-cleaning ceramic honeycomb filters, etc.

### BACKGROUND OF THE INVENTION

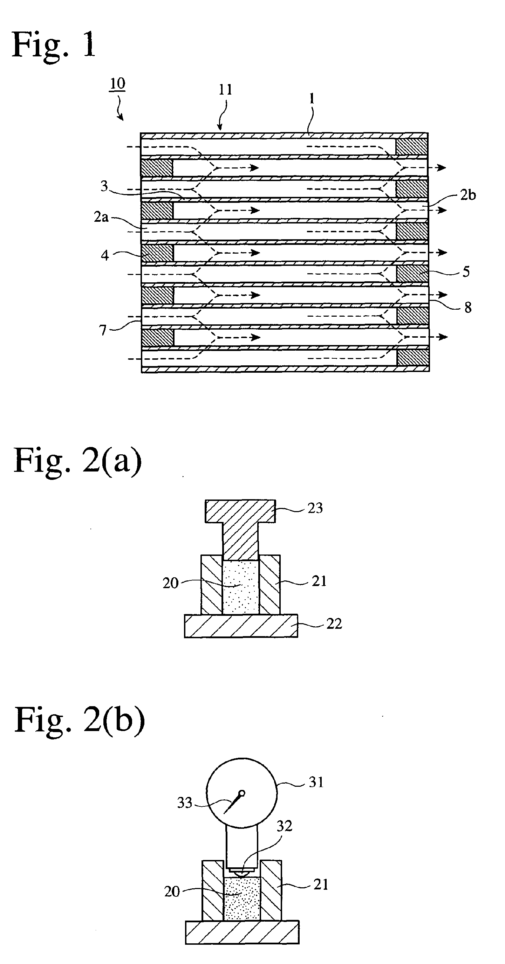

To protect regional and global environment, exhaust parts of diesel engines, etc. are provided with ceramic honeycomb filters for capturing particulate matter contained in a large amount in an exhaust gas. As shown in Fig. 1, a ceramic honeycomb filter 10 comprises a ceramic honeycomb structure 11 comprising porous cell walls 3 forming large numbers of flow paths 2a, 2b and an outer peripheral wall 1, and plugs 4, 5 formed in a checkerboard pattern for sealing both ends 7, 8 of the flow paths 2a, 2b alternately. An exhaust gas flows into the flow paths 2a whose inlets 7 are not sealed, passes through the cell walls 3, and exits from the flow paths 2b whose outlets 8 are not sealed. While the exhaust gas passes through the cell walls 3, particulate matter in the exhaust gas is captured by pores on and in the cell walls 3.

A ceramic honeycomb structure 11 comprising cell walls 3 having fine pores is produced by the steps of (1) mixing and blending starting materials comprising ceramic materials (for instance, cordierite powder), a molding aid, a pore-forming material, etc. with water to prepare a moldable material, (2) extruding the moldable material through a honeycomb-shaped die to form a green ceramic honeycomb body having a honeycomb structure integrally comprising an outer peripheral wall 1 and cell walls 3, and (3) drying and sintering the green body. To improve the efficiency of capturing particulate matter in an exhaust gas while reducing pressure loss, the pore-forming material is effectively used to control the pore size and porosity of cell walls.
Particularly when a green ceramic honeycomb body is extruded to form a large ceramic honeycomb structure having an outer diameter exceeding 200 mm with as high porosity as 50% or more, foamed resins are used as the pore-forming material.

When a moldable ceramic material is extrusion-molded to form a green ceramic honeycomb body, the moldability of the green body is affected by the rheological characteristics of the moldable ceramic material. The moldable ceramic material should have fluidity when extrusion-molded, and shape retention after formed into the green body.

JP 6-279090 A discloses a moldable ceramic material used as a starting material extrusion-molded to form a ceramic honeycomb structure, in which when the change of strain with time is measured at a molding temperature under a constant stress, the moldable ceramic material meets the relation of η₀/G₀ ≤ 105 (sec), and η₁/G₁ ≤ 70 (sec), wherein (1) Go (Pa) is a modulus 0 determined by dividing the stress by strain generated by adding the stress, (2) η₀ (Pa·sec) is a viscosity 0 determined by dividing the stress by the value of strain generated by applying stress continuously, at which the change of the strain with time (shearing speed) becomes substantially constant, (3) G₁ (Pa) is a modulus 1 determined by dividing the stress by (strain determined by extrapolating a line of strain with a substantially constant shearing speed to the axis of time (0 second) - strain determined in (1) above), and (4) η₁ (Pa·sec) is a viscosity 1 determined by dividing the stress by an average shearing speed determined by dividing (strain 4 seconds after the stress is added - strain determined in (1) above) by 4 seconds. This reference describes that the moldable ceramic material had good fluidity with shape retention kept after extrusion.

JP 2000-302525 A discloses a moldable ceramic material used as a starting material for extrusion-molding a honeycomb structure, which has rheological characteristics comprising a storage modulus of 1.5 x 10⁶ to 5.0 x 10⁶ (Pa) and a complex viscosity of 4.0 x 10⁴ to 9.0 x 10⁴ (Pa.s) in a viscoelasticity test, and a yield point of 5.0 x 10⁴ to 1.5 x 10⁵ (Pa) and a plastic viscosity of 10.0-1000.0 (Pa.s) in a capillary rheometer test, and a method for extruding the moldable material. This reference describes that the moldable ceramic material has such good extrudability that the resultant green bodies are less likely to have surface failure and splits, particularly suitable as starting materials for extrusion-molding thin-wall honeycomb structures having wall thickness of 100 µm or less.

However, when the moldable ceramic materials described in JP 6-279090 A and JP 2000-302525 A are extruded to green ceramic honeycomb bodies for large ceramic honeycomb structures with as high porosity as 50% or more and outer diameters exceeding 200 mm, they do not have sufficient fluidity during extrusion, resulting in defects such as the deformation of flow paths, the cracking of cell walls, the undulation of flow paths, etc., and the extruded green bodies with poor shape retention which are deformed by their own weight. Investigation by the inventors has revealed that although the methods of measuring rheological characteristics described in JP 6-279090 A and JP 2000-302525 A are suitable for moldable materials for low-porosity ceramic bodies, they are not suitable for moldable ceramic materials for large ceramic honeycomb structures with as high porosity as 50% or more and outer diameters exceeding 200 mm, failing to determine optimum rheological characteristics to obtain good balance between shape retention and fluidity. Particularly when a moldable material containing a large amount of a foamed resin as a pore-forming material is used, the measured values of the above rheological characteristics are unstable because of differences in a particle size distribution among pore-forming material lots. Accordingly, even if moldable materials are prepared based on the rheological characteristics measured by the methods described in JP 6-279090 A and JP 2000-302525 A, optimum balance between shape retention and fluidity is unlikely achieved.

JP 2003-89575 A discloses a method for producing a ceramic structure comprising mixing a cordierite-forming material containing an alumina component, a foamed resin, a plasticizer and water, and forming the resultant moldable ceramic material into a green body, hydraulic alumina being used as part of the alumina component to prevent the breakage of the foamed resin during blending and the deformation of the green body during molding. This reference describes that the moldable ceramic material preferably has hardness of 17-30 mm when measured by a hardness meter in which a conical tip is connected to a support via a spring.

However, when measuring a moldable ceramic material having low hardness because of a larger amount of a pore-forming material (foamed resin) for obtaining a large ceramic honeycomb structure having as high porosity as 50% or more and an outer diameter exceeding 200 mm, a method using the apparatus described in JP 2003-89575 A may provide unevenness in the measured hardness depending on a contact state between a conical tip and a sheath, failing to measuring accurate rheological characteristics. As a result, optimum balance between shape retention and fluidity may not be achieved. When a larger amount of a pore-forming material (foamed resin) is added to the moldable material to obtain a high-porosity honeycomb structure, the measured value of hardness is more unstable because of differences in particle size distribution, etc. among pore-forming material lots. Thus, even if characteristics measured by a method using the apparatus of JP 2003-89575 A are used for extrusion-molding, it would be difficult to achieve optimum balance between the fluidity and shape retention of a moldable ceramic material.

### OBJECT OF THE INVENTION

Accordingly, an object of the present invention is to provide a method for producing a ceramic honeycomb structure, which can appropriately evaluate the rheological characteristics of a moldable ceramic material with sufficiently controlled fluidity and shape retention when formed into a green body, in extrusion molding to a green ceramic honeycomb body for a large ceramic honeycomb structure having as high porosity as 50% or more and an outer diameter exceeding 200 mm.

### DISCLOSURE OF THE INVENTION

Thus, the first method of the present invention for producing a ceramic honeycomb structure comprises the steps of mixing and blending starting materials comprising ceramic materials, a molding aid and a pore-forming material to obtain a moldable material, and extruding the moldable material in a honeycomb shape, the moldable material having type C durometer hardness (according to JIS K 7312) of 16-23.

The second method of the present invention for producing a ceramic honeycomb structure comprises the steps of mixing and blending starting materials comprising ceramic materials, a molding aid and a pore-forming material to obtain a moldable material, adjusting the properties of the moldable material, and extruding the moldable material in a honeycomb shape, the type C durometer hardness (according to JIS K 7312) of the moldable material being adjusted to 16-23 in the step of adjusting the properties of the moldable material.

The moldable material is preferably extruded at an apparent shearing speed of 5000-7000/sec and an apparent viscosity of 50-300 Pa·s.

The ceramic honeycomb structure preferably has porosity of 50-80%.

### BRIEF DESCRIPTION OF THE DRAWINGS

Fig. 1 is a schematic cross-sectional view showing one example of ceramic honeycomb filters.

Fig. 2(a) is a schematic view showing a method for measuring durometer hardness.

Fig. 2(b) is a schematic view showing another method for measuring durometer hardness.

### DESCRIPTION OF THE PREFERRED EMBODIMENTS

[1] Production method

(1) First method

The first method of the present invention for producing a ceramic honeycomb structure comprises mixing and blending starting materials comprising ceramic materials, a molding aid and a pore-forming material to obtain a moldable material, and extruding the moldable material in a honeycomb shape, the moldable material having type C durometer hardness (according to JIS K 7312) of 16-23.

Particularly when a green ceramic honeycomb body for a large ceramic honeycomb structure having as high porosity as 50% or more and an outer diameter exceeding 200 mm is extruded, a moldable material containing a large amount of a foamed resin as a pore-forming material is used. The rheological characteristics of such a moldable material containing a large amount of a pore-forming material are uneven with poor reproducibility when measured by a usual method using a rheometer, etc.

On the other hand, when the hardness of a moldable material is measured by a type C durometer according to JIS K 7312, hardness can be measured with small unevenness even on a moldable material containing a foamed resin as a pore-forming material. Therefore, by using a moldable material having type C durometer hardness (according to JIS K 7312) of 16-23, the moldable material has sufficient fluidity and shape retention after extrusion with good balance. When the type C durometer hardness (according to JIS K 7312) is less than 16, the moldable material has too low hardness, failing to provide sufficient shape retention. When the type C durometer hardness is more than 23, the moldable material has too high hardness, failing to show sufficient fluidity.

An apparatus for measuring the type C durometer hardness comprises a hemispheric indenter having a diameter of 2.54 mm, and a spring connected to the indenter, such that the indenter is pressed onto a moldable material surface by the force of the spring to deform the moldable material, thereby determining hardness from the resistance of the moldable material and the intrusion depth of the indenter into the moldable material in a state where a spring force is balanced. The hardness is expressed by a value read with an equal interval between 0 point when the intrusion depth is maximum and 100 points when the intrusion depth is 0. Because the type C durometer hardness is measured by pushing a hemispheric indenter into a moldable material, it does not suffer unevenness in measured values due to a contact state between a conical tip and a sheath as in the hardness meter described in JP 2003-89575 A, thereby providing stable values of hardness.

(2) Second method

The second method of the present invention for producing a ceramic honeycomb structure comprises the steps of mixing and blending starting materials comprising ceramic materials, a molding aid and a pore-forming material to obtain a moldable material, adjusting the properties of the moldable material, and extruding the moldable material in a honeycomb shape, the type C durometer hardness (according to JIS K 7312) of the moldable material being adjusted to 16-23 in the step of adjusting the properties of the moldable material.

The step of preparing the moldable material, the extruding step, and the step of measuring type C durometer hardness are the same as in the first method of the present invention. In the second method, the fluidity of the moldable material is controlled based on the measured type C durometer hardness of the moldable material to adjust the moldable material.

For instance, when the type C durometer hardness is less than 16, a molding aid (if necessary, ceramic materials and a pore-forming material) is added again, and re-mixing and re-blending are conducted to adjust the moldable material. When the type C durometer hardness is much lower than 16, the adjustment of the moldable material cannot be achieved simply by adding a molding aid, etc., failing to achieve enough blending by re-mixing and re-blending, so that a moldable material is newly prepared. When the type C durometer hardness exceeds 23, water is added again to conduct re-mixing and re-blending, thereby adjusting the moldable material. Such adjustment provides a moldable material with type C durometer hardness of 16-23.

(3) Apparent shearing speed and apparent viscosity

In the first and second methods of the present invention, an apparent shearing speed is preferably 5000-7000/sec, and an apparent viscosity is preferably 50-300 Pa·s during extrusion. When a green ceramic honeycomb body for a large ceramic honeycomb structure having as high porosity as 50% or more and an outer diameter exceeding 200 mm is extruded with such fluidity characteristics, the extruded green body is resistant to deformation by its own weight, thereby having sufficient shape retention. When the apparent shearing speed of the moldable material is less than 5000/sec, the moldable material has high hardness, failing to exhibit enough fluidity. When the apparent shearing speed exceeds 7000/sec, the moldable material does not have enough shape retention. When the apparent viscosity is less than 50 Pa·s, the moldable material does not have enough shape retention. When the apparent viscosity exceeds 300 Pa·s, the moldable material has higher hardness, failing to exhibit fluidity.

When a moldable material having type C durometer hardness (according to JIS K 7312) of 16-23, preferably an apparent shearing speed of 5000-7000/sec and an apparent viscosity of 50-300 Pa·s during extrusion, is extrusion-molded to green ceramic honeycomb bodies, the moldable material exhibits sufficient fluidity, and the green bodies are resistant to deformation by their own weight, thereby providing large ceramic honeycomb structures having porosity of 50% or more and outer diameters exceeding 200 mm. Porosity exceeding 80% provides the ceramic honeycomb structure with decreased strength and low particulate-matter-capturing efficiency when used as a ceramic honeycomb filter. Accordingly, the porosity of a ceramic honeycomb structure is preferably 50-80%.

The present invention will be explained in further detail by Examples below without intention of restricting the present invention thereto.

Examples 1-8, Comparative Examples 1-3

Kaolin powder, talc powder, silica powder, alumina powder and aluminum hydroxide powder were mixed to prepare a ceramic material comprising 50% by mass of SiO₂, 35% by mass of Al₂O₃ and 15% by mass of MgO, and blended with methylcellulose and hydroxypropyl methylcellulose as molding aids, a lubricant, microcapsules as a pore-forming material, and water in a kneader to obtain a moldable ceramic material. Different amounts of water were used in Examples 1-8 and Comparative Examples 1-3. These moldable ceramic materials were measured with respect to type C durometer hardness (according to JIS K 7312), and an apparent shearing speed and an apparent viscosity by a flow tester. The measurement results are shown in Table 1.

A sample 20 obtained by applying a load of 0.3 kN to the blended moldable ceramic material in a container 21 of 22 mm in diameter and 30 mm in depth with a piston 23 as shown in Fig. 2(a) was brought into contact with an indenter 32 of a durometer hardness meter 31 (ASKER CL-150) as shown in Fig. 2(b) to read a value shown by an indicator 33 after 240 seconds, as the type C durometer hardness (according to JIS K 7312) of the moldable ceramic material. The apparent shearing speed and the apparent viscosity were measured by extruding the moldable material through a die hole of 1 mm in diameter connected to a flow tester (CFT-500D available from Shimadzu Corp.). All of these measurements were conducted at 25°C.

The blended moldable material was extruded to form a green honeycomb body of 267 mm in diameter, 300 mm in length, 0.3 mm in cell wall thickness, and 1.5 mm in cell wall pitch. After drying, this green ceramic honeycomb body was sintered at 1400°C for 4 hours to produce a ceramic honeycomb structure. The porosity of this ceramic honeycomb structure was measured by mercury porosimetry. The results are shown in Table 1.

The defects of the ceramic honeycomb structure, the deformation of flow paths, the cracking of cell walls and the undulation of flow paths, were observed by the naked eye, to evaluate the fluidity of the moldable ceramic material during extrusion by the following standard.
Poor The ceramic honeycomb structure had the deformation of flow paths, the cracking of cell walls or the undulation of flow paths.
Good The ceramic honeycomb structure had the deformation of flow paths, the cracking of cell walls or the undulation of flow paths on a practically harmless level.
Excellent The ceramic honeycomb structure did not have the deformation of flow paths, the cracking of cell walls and the undulation of flow paths.

The deformation of the dried ceramic honeycomb structure was observed by the naked eye to evaluate its shape retention after extrusion by the following standard.
- Poor: Unable to use because of deformation.
- Good: Practically usable despite deformation.
- Excellent: Free from deformation.

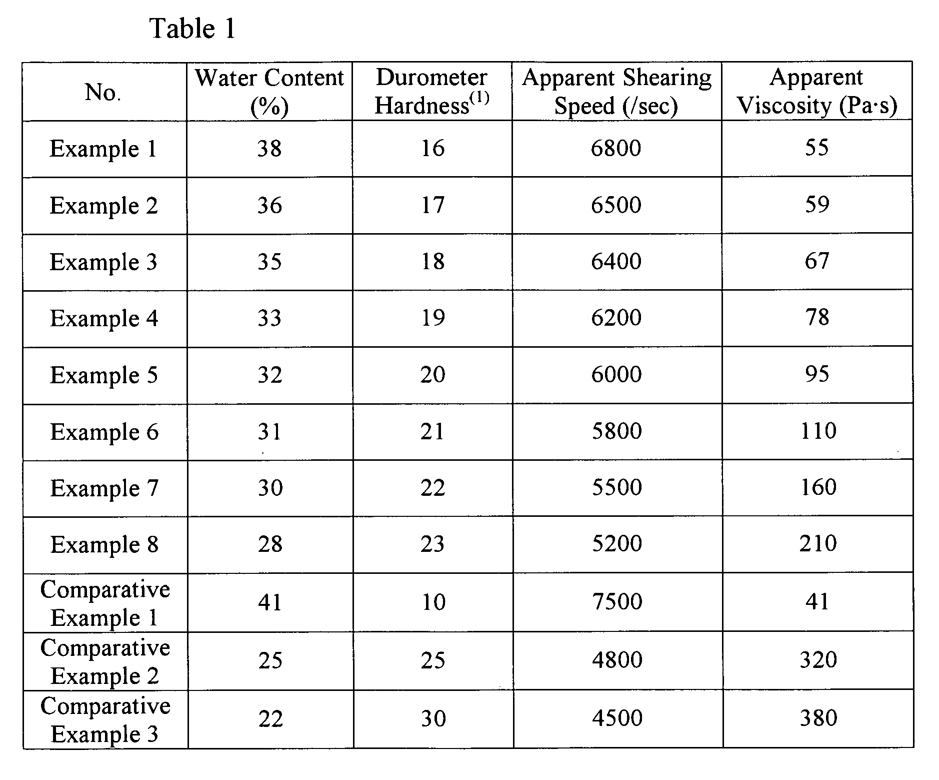

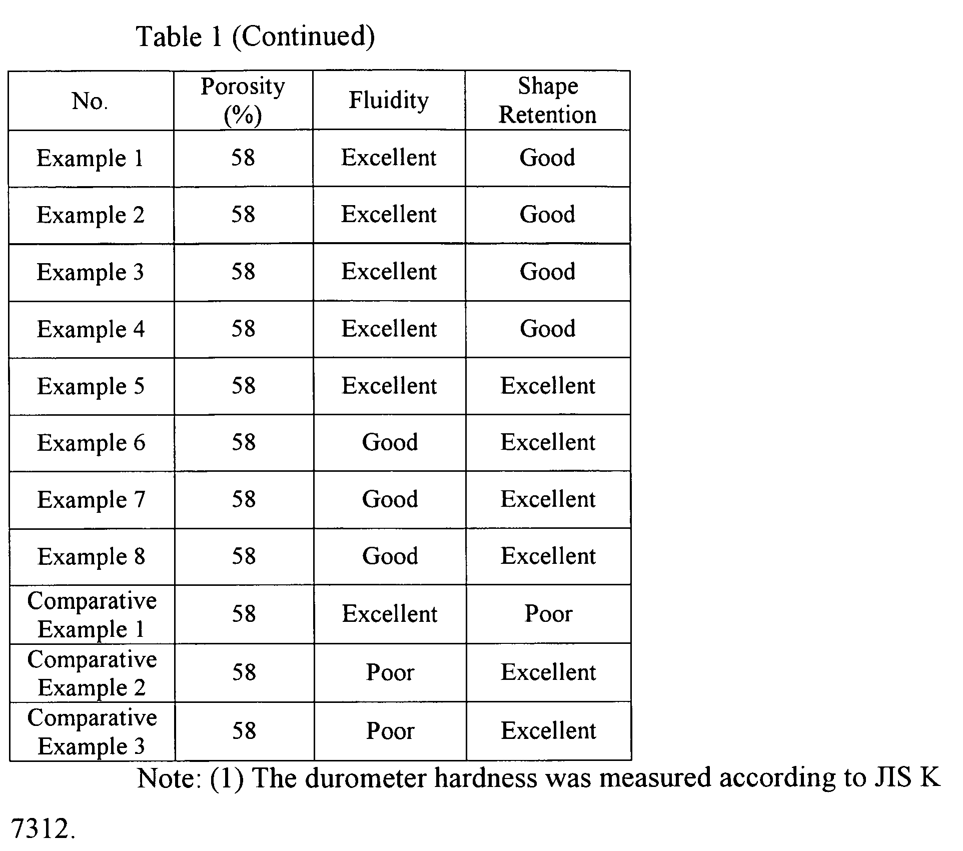

As shown in Table 1, the moldable ceramic materials of the present invention in Examples 1-8 have enough fluidity in extrusion-molding, because they do not have the deformation of flow paths, the cracking of cell walls and the undulation of flow paths, or have them without practical problems. Further, they have sufficient shape retention after extrusion, with a good balance of fluidity and shape retention. On the other hand, the moldable ceramic materials of Comparative Examples 1-3 have insufficient fluidity or shape retention, resulting in poor balance between fluidity and shape retention.

### EFFECT OF THE INVENTION

Because the method of the present invention for producing a ceramic honeycomb structure can appropriately evaluation the rheological characteristics of a moldable ceramic material, it can prepare a moldable ceramic material having appropriate fluidity and shape retention, even when extruding a green ceramic honeycomb body for a large ceramic honeycomb structure having as high porosity as 50% or more and an outer diameter exceeding 200 mm.

## Claims

1. A method for producing a ceramic honeycomb structure comprising the steps of mixing and blending starting materials comprising ceramic materials, a molding aid and a pore-forming material to obtain a moldable material, and extruding the moldable material in a honeycomb shape, said moldable material having type C durometer hardness (according to JIS K 7312) of 16-23.

2. A method for producing a ceramic honeycomb structure comprising the steps of mixing and blending starting materials comprising ceramic materials, a molding aid and a pore-forming material to obtain a moldable material, adjusting the properties of the moldable material, and extruding the moldable material in a honeycomb shape, the type C durometer hardness (according to JIS K 7312) of the moldable material being adjusted to 16-23 in the step of adjusting the properties of said moldable material.

3. The production method according to claim 1 or 2, wherein said moldable material has an apparent shearing speed of 5000-7000/sec and an apparent viscosity of 50-300 Pa·s during extrusion.

4. The production method according to any one of claims 1-3, wherein said ceramic honeycomb structure has porosity of 50-80%.
